# EUROPÄISCHE PATENTSCHRIFT

(11) **EP 3 708 869 B1**
(45) Veröffentlichungstag und Bekanntmachung des Hinweises auf die Patenterteilung: **03.01.2024**
(21) Anmeldenummer: 20157609.7
(22) Anmeldetag: 17.02.2020
(51) Int. Cl.: F16G 15/00, B66C 1/14

(54) **VERKÜRZUNGSHAKEN MIT KUPPELANSCHLUSS**
SHORTENING HOOK WITH COUPLING CONNECTION
CROCHET DE RACCOURCISSEMENT POURVU DE RACCORD À LA COUPOLE

(30) Priorität: 14.03.2019 DE 202019101470 U
(43) Veröffentlichungstag der Anmeldung: 16.09.2020
(73) Patentinhaber: Pewag Austria GmbH, 8605 Kapfenberg (AT)
(72) Erfinder: OSWALD, Bernhard, 8605 Kapfenberg (AT); ZETTLER, Rene, 8600 Bruck an der Mur (AT)
(74) Vertreter: Patentanwälte Geyer, Fehners & Partner mbB

(56) Entgegenhaltungen:
- WO-A1-97/23405
- WO-A1-2017/075605
- US-B1- 6 948 752

## Beschreibung

Die Erfindung bezieht sich auf Verkürzungshaken mit Kuppelanschluß zum Verkürzen von Anschlagketten in Gehängen.

Solche Verkürzungshaken, wie sie im Markt angeboten werden, weisen einen Hakenkörper auf, der oben eine Öse zum Ankoppeln an einen Aufhängering und unten einen Kuppelanschluß mit einem von zwei parallelen Seitenwangen begrenzten, nach unten offenen Kuppelschlitz zum Anhängen einer Kette umfaßt. Im mittleren Bereich des Hakenkörpers, der zwischen der oberen Öse und dem unteren Kuppelanschluß liegt, ist ein Einhakbereich ausgebildet, der einen nach oben offenen geradlinig verlaufenden Verkürzungsschlitz ausbildet, an dem eine am Kuppelanschluß angekoppelte Kette mit ihrem freien Endbereich einhakbar ist. Da an einem solchen Verkürzungshaken sowohl der Kuppelanschluß, in dem die Kette dauerhaft hängt, wie auch der Verkürzungsschlitz, in welchem die Kette verkürzt wird, ausgebildet ist, ist auch nur dieser Verkürzungshaken sowohl als Verkürzer, wie auch als Verbindungsteil zwischen dem Aufhängering und der Kette erforderlich.

Häufig werden bei Verwendung in einem Zwei-Strang-Gehänge zwei solche Haken an einem Aufhängering montiert, wobei an jedem derselben die Öse, der Verkürzungsschlitz und das Kuppelteil in einer Linie untereinander angeordnet sind. Dabei liegt auch der Schwerpunkt jedes Hakens auf dieser Linie, so daß sich beide Haken so ausrichten, daß die Verkürzungsschlitze beider Haken jeweils nicht nur in einer Achse, sondern auch jeweils nebeneinander liegen, so daß ein einfaches Verkürzen der Kette blockiert ist. Eine Abhilfe kann hier auch nicht dadurch geschaffen werden, daß man einen der beiden Haken um 180° zum anderen versetzt an der Öse befestigt, da die Hakenspitzen dann zwar in unterschiedliche Richtungen zeigen, die Verkürzungsschlitze aber wieder genau nebeneinander liegen.

Im Markt wurden auch schon Verkürzungshaken angeboten, die neben einer großen oberen Öse unten zwei nebeneinander angebrachte Kuppelanschlüsse aufweisen. Im mittleren Bereich der jeweiligen Hakenkörper ist nach jeder der beiden Seiten desselben jeweils ein Einhakbereich mit einem nach oben offenen Verkürzungsschlitz vorgesehen. Damit ist es zwar möglich, bei Verwendung eines solchen Verkürzungshakens in einem Zwei-Strang-Gehänge die Montage eines zweiten Verletzungshakens für solche Gehänge zu vermeiden. Jedoch haben solche Verkürzungshaken den Nachteil, daß an einem Verkürzungshaken gleichzeitig zwei jeweils einen Verkürzungsschlitz ausbildende Hakenbereiche und unten auch zwei Kuppelanschlüsse vorgesehen sind. Dies hat zur Folge, daß sich jeder dieser Einhakbereiche praktisch nie optimal zur Kette ausrichten kann, d. h. daß der jeweilige Verkürzungsschlitz in Richtung der eingehakten Kette weisen würde.

Die US 6,948,752 B1 beschreibt einen Kettenverkürzer nach dem Oberbegriff des Anspruchs 1, der mit geschlossenen Hubringen verbunden werden kann. Weitere Kettenverkürzer sind unter anderem aus der DE102008028111A1 oder der US374710A bekannt.

Der Erfindung liegt die Aufgabe zugrunde, einen Verkürzungshaken mit Kuppelanschluß vorzuschlagen, der nicht nur ein besonders leichtes Einhängen der Kette in den Verkürzungsschlitz gestattet und bei dem sich bei in den Verkürzungsschlitz eingehängter Kette der Haken selbsttägig in Zugrichtung der Kette so ausrichtet, daß der Verkürzungsschlitz stets in Richtung der Kette weist, was eine optimale Ausrichtung ergibt. Dies ist insbesondere im Fall des Anbringens zweier erfindungsgemäßer Verkürzungshaken an der oberen Öse, und zwar in um 180° zueinander versetzter Ausrichtung, zur Verwendung bei Zwei-Strang-Gehängen besonders wichtig. Erfindungsgemäß wird dies erreicht durch einen Verkürzungshaken mit Kuppelanschluß zum Verkürzen von Anschlagketten in Gehängen, mit einem Hakenkörper, der oben eine Öse zum Ankoppeln an einen Aufhängering und unten einen Kuppelanschluß mit einem von zwei parallelen Seitenwangen begrenzten, nach unten offenen Kuppelschlitz zum Anhängen einer Kette sowie in seinem mittleren Bereich einen einen nach oben offenen geradlinig verlaufenden Verkürzungsschlitz ausbildenden Einhakbereich aufweist, an dem eine am Kuppelanschluß angekoppelte Kette mit ihrem freien Endbereich einhakbar ist, wobei am Hakenkörper nur jeweils ein Kuppelschlitz und ein Verkürzungsschlitz ausgebildet und, in Seitenansicht des Verkürzungshakens gesehen, Kuppelschlitz und Verkürzungsschlitz seitlich zueinander versetzt angebracht sind. Dadurch, daß der Verkürzungsschlitz und der Kuppelschlitz seitlich zueinander versetzt sind und nicht mehr, wie bei bekannten Verkürzungshaken, in einer Linie miteinander und mit der oberen Öse ausgerichtet sind, verschiebt sich der Schwerpunkt des Verkürzungshakens im Vergleich zu diesem bekannten Haken ebenfalls seitlich.

Durch die am Kuppelanschluß in der Regel dauerhaft hängende Kette wird im ansonsten unbelasteten Zustand des Verbindungshakens der Kuppelschlitz infolge dieses Kettengewichtes relativ zur oberen Öse so ausgerichtet, daß beide senkrecht übereinander liegen. Dies hat zur Folge, daß der bei dem erfindungsgemäßen Verkürzungshaken ausgebildete, den Verkürzungsschlitz ausbildende Einhakbereich an einer Seite des Verkürzungshakens seitlich vorsteht, wodurch, wenn die Kette zur Verkürzung in den Verkürzungsschlitz eingehängt wird, die Kette von der Bedienungsperson unschwer in den Verkürzungsschlitz eingehängt werden kann.

Es ist dabei nicht mehr notwendig, wie bei den eingangs beschriebenen bekannten Verkürzungshaken, den jeweiligen Einhakbereich so zu positionieren, daß der Schlitz gut zugänglich ist, was besonders vorteilhaft ist, wenn zum Einhängen der Kette aufgrund deren Gewichts beide Hände eingesetzt werden müssen oder eine zweite Person beigezogen werden muß.

Ist die Kette auch in den Verkürzungsschlitz eingehängt, verschwenkt sich der erfindungsgemäße Verkürzungshaken um die Ösenaufhängung selbsttätig so, daß eine Ausrichtung von Verkürzungsschlitz und Kuppelschlitz in Zugrichtung des jeweils dort angreifenden Kettenabschnitts erfolgt, so daß die Kette korrekt im Haken liegt.

Werden für die Verwendung bei einem Zwei-Strang-Gehänge zwei erfindungsgemäße Verkürzungshaken mit ihren oberen Ösen an den Aufhängering, jeweils aber zueinander um 180° verdreht, angeordnet, dann wird durch die erfindungsgemäße Ausgestaltung der beiden Verkürzungshaken erreicht, daß die Einhakbereiche beider Verkürzungshaken nicht, wie bei den eingangs geschilderten bekannten Verkürzungshaken, direkt nebeneinander liegen, sondern nichtdeckungsgleich nach beiden Seiten der Anordnung versetzt zueinander ausgerichtet sind und dort jeweils seitlich vorstehen, so daß auch hier eine gute Zugänglichkeit der Kuppelschlitze gewährleistet ist. Auch hier richten sich dann bei fertig montierter Kette die jeweiligen Verkürzungsschlitze in Zugrichtung des dort jeweils angeschlossenen Kettenabschnitts selbsttätig aus.

Bei dem erfindungsgemäßen Verkürzungshaken ist es von ganz besonderem Vorteil, wenn der Verkürzungsschlitz relativ zum Kuppelschlitz unter einem spitzen Winkel, der am Hakenkörper nach unten hin divergiert, ausgerichtet ist, wobei, erneut bevorzugt, dieser Winkel im Bereich von 10° bis 40°, ganz besonders bevorzugt bei 15°, liegt. Hierdurch wird eine optische Gestaltung des erfindungsgemäßen Verkürzungshakens erreicht, die eine besonders günstige Zugänglichkeit des Verkürzungsschlitzes sowie eine günstige Ausrichtung der am jeweiligen Verkürzungshaken montierten Kettenabschnitte gestattet.

Bei der Erfindung ist es weiterhin vorgesehen, dass die Öse oben am Hakenkörper einen kreisförmigen Querschnitt aufweist und die Längsmittellinie des Kuppelschlitzes durch den Mittelpunkt des Querschnitts der Öse verläuft.

Weiterhin ist es bei der Erfindung von Vorteil, wenn am Einlaß des Verkürzungsschlitzes eine Sicherungsfalle vorgesehen ist, die verhindert, daß ein eingehängtes Kettenglied oder ein eingehängter Kettenabschnitt aus dem Verkürzungsschlitz unerwünscht herauslaufen kann.

Die Erfindung wird anhand von Zeichnungen im Prinzip beispielshalber noch näher erläutert. Es zeigen:
- Fig. 1: einen Verkürzungshaken aus dem Stand der Technik;
- Fig. 2: die Anordnung zweier Verkürzungshaken aus dem Stand der Technik gemäß Fig. 1, aber zueinander um 180° verdreht, die beide an einem Aufhängering montiert sind;
- Fig. 3: eine Seitenansicht eines erfindungsgemäßen Verkürzungshakens;
- Fig. 4: die Darstellung eines an einem Aufhängering montierten Verkürzungshakens gemäß Fig. 3, mit einer mit einem Ende am Kuppelanschluß montierten Anschlagkette, die an ihrem anderen Endbereich in den Verkürzungsschlitz des Verkürzungshakens eingehängt ist, und
- Fig. 5: eine der Fig. 2 entsprechende Anordnung zweier Verkürzungshaken gemäß Fig. 3 an einem Aufhängering, mit einer um 180° zueinander verdrehten Anordnung beider Verkürzungshaken und der Darstellung des Endes einer an dem in der gezeigten Anordnung vorne liegenden Verbindungshaken ausgebildeten Kuppelanschluß montierten Anschlagkette.

In den nachfolgenden Ausführungen sind in den Figuren gleiche Bezugszeichen für einander entsprechende bzw. gleiche Teile verwendet, auch wenn diese Teile zueinander verschiedene Gestaltungen zeigen.

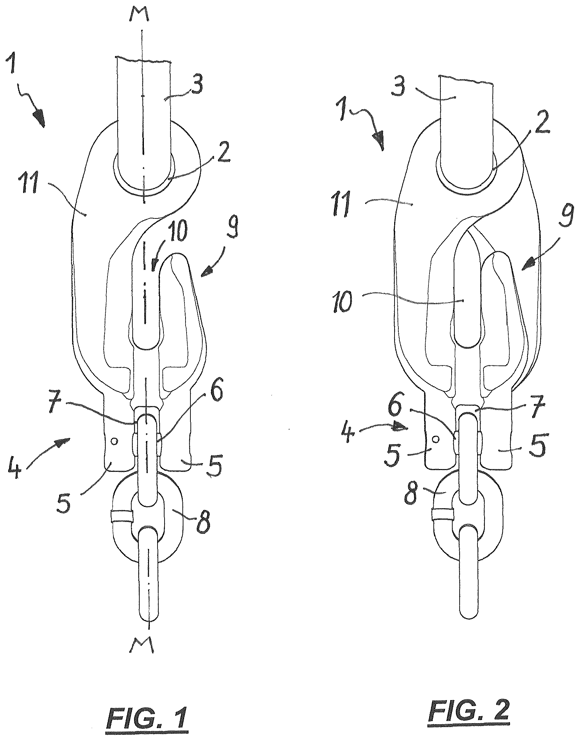

Der in Fig. 1 dargestellte Verkürzungshaken 1 entspricht dem Verkürzungshaken, der aus dem Stand der Technik bekannt ist und einleitend weiter oben beschrieben wurde.

Dieser Verkürzungshaken 1 weist oben eine Öse 2 auf, mit der er an einem Aufhängering 3 montiert ist.

Fig. 2 zeigt nun eine Anordnung, in der zwei solche bekannte Verkürzungshaken 1 gemeinsam an dem oberen Aufhängering 3 montiert sind, wobei die beiden Verkürzungshaken jedoch in einer zueinander um 180° verdrehten Anordnung eingesetzt sind.

Jeder dieser Verkürzungshaken 1 ist neben seiner oberen Öse (die Bezeichnung "*oben*" wird so verwendet, daß sie dem dem Aufhängering 3 zugewandten Endbereich des Verkürzungshakens 1 zugeordnet ist) an seinem gegenüberliegenden, unteren Ende mit einem Kuppelanschluß 4 versehen. Wie die Fig. 1 und 2 zeigen, umfaßt dieser Kuppelanschluß 4 zwei parallel zueinander gerichtete Seitenwangen 5, zwischen denen ein Kuppelschlitz 7 ausgebildet ist.

Innerhalb des Kuppelschlitzes 7 verläuft zwischen den beiden Seitenwangen 5 ein Montagebolzen 6, an dem eine anzuschließende Anschlagkette 8 am Verkürzungshaken 1 montiert werden kann.

Üblicherweise ist bei einem Verkürzungshaken 1 in aller Regel bereits dauerhaft eine Anschlagkette 8 am Kuppelanschluß 4 montiert.

Im Bereich zwischen der oberen Öse 2 und dem unteren Kuppelanschluß 4 bildet der Hakenkörper 11 in seinem mittleren Abschnitt einen Einhakbereich 9 aus, der einen hakenförmig nach oben verlaufenden, offenen, geradlinigen Verkürzungsschlitz 10 ausbildet, an dem eine am Kuppelanschluß 4 angekoppelte Anschlagkette 8 mit ihrem freien Endbereich einhakbar ist.

Wie die Fig. 1 und 2 zum Stand der Technik zeigen, ist bei diesem bekannten Verkürzungshaken 1 die obere Öse 2, der nach oben verlaufende Verkürzungsschlitz 10 sowie der im Kuppelanschluß 4 ausgebildete Kuppelschlitz 7 in einer Reihe zueinander ausgerichtet, d. h. die Mittellinie von Kuppelschlitz 7 und Verkürzungsschlitz 10 und die Mitte der oberen Öse 2 liegen alle zueinander ausgerichtet auf einer Geraden M (vgl. strichpunktierte Gerade in Fig. 1).

Zur Verwendung bei einem Zwei-Strang-Gehänge werden, wie in Fig. 2 gezeigt, zwei der bekannten Verkürzungshaken 1 entsprechend Fig. 1 mit ihren oberen Ösen 2 am Aufhängering 3 montiert, und zwar so, daß die Ausrichtung der beiden Haken um 180° zueinander gegenläufig vorgenommen ist, wie dies in Fig. 2 gezeigt ist, wobei die Hakenspitzen der Einhakbereiche 9 in einander entgegengesetzte Richtungen weisen.

Da hier die beiden eingesetzten Verkürzungshaken 1 jeweils zueinander längs einer Linie ausgerichtet Ösen 2, Kuppelschlitz 7 sowie Verkürzungsschlitz 10 aufweisen, liegt der Schwerpunkt jedes dieser Haken 1 so, daß sich die Haken 1 so ausrichten, daß die Verkürzungsschlitze 10 beider Haken 1 in einer gemeinsamen Achse liegen, was ein einfaches Verkürzen der Kette blockiert. Dieser Zustand ist in Fig. 2 dargestellt.

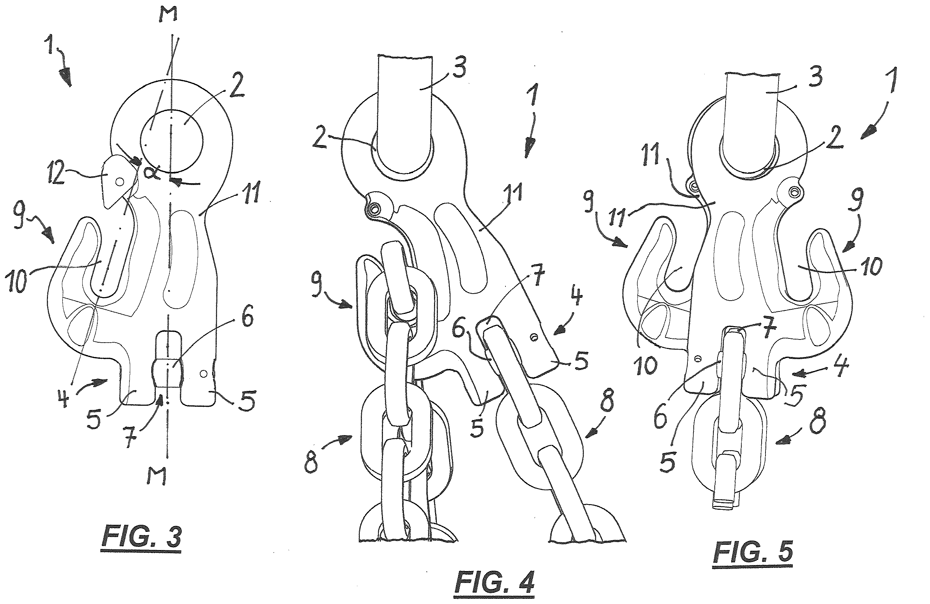

Die Fig. 3 bis 5 zeigen nun einen Verkürzungshaken 1 gemäß der neuen Erfindung:
Auch hier ist am Hakenkörper 11 jeweils an einer Seite desselben ein Verkürzungsschlitz 10 und unten ein Kupplungsanschluß 5 mit einem Kuppelschlitz 7 ausgebildet.

Allerdings ist bei dieser Hakengestaltung der wiederum zwischen der oberen Öse 2 und dem unteren Kuppelanschluß 4 vorgesehene Einhakbereich 9 mit dem an ihm ausgebildeten, geradlinig nach oben offenen Verkürzungsschlitz 10 so vorgesehen, daß, in Seitenansicht des Verkürzungshakens 1 gesehen, der Kuppelschlitz 7 und der Verkürzungsschlitz 10 seitlich zueinander versetzt ausgebildet sind, somit Verkürzungsschlitz 10 und Kuppelschlitz 7 nicht mehr, wie bei der bekannten Kettenform nach den Ansprüchen 1 und 2, beide achsgleich zum Mittelpunkt der oberen Öse 2 liegen.

Vielmehr verschiebt sich der Schwerpunkt dieses Hakens 1 im Vergleich zu dem bekannten Haken aus Fig. 1 ebenfalls seitlich.

Da bei Verkürzungshaken 1 in aller Regel die Anschlagkette 8 dauerhaft im Kuppelschlitz 7 am Kuppelanschluß 4 montiert ist, verschiebt sich dabei der Gesamtschwerpunkt durch das Gewicht der unten montierten Anschlagkette 8 so, daß die Öse 2 und das Kuppelteil 4 des Verkürzungshakens 1, wenn dieser mit seiner oberen Öse 2 an einem Aufhängering 3 befestigt ist, sich vertikal ausrichten, was zur Folge hat, daß der Verkürzungsschlitz 10 in Folge seines seitlichen Versatzes zum Kuppelschlitz 7 deutlich seitlich vorragt. Da stets im sogenannten unbelasteten Zustand des Verkürzungshakens 1 (d. h. Verkürzungshaken 1 mit unten montierter Kette 8) eine gewünschte Kettenverkürzung vorgenommen wird, ist hier auch nur das Eigengewicht des gesamten Gehänges von Bedeutung.

Hieraus wird erkennbar, daß der nach außen versetzte Verkürzungsschlitz 10 für das Einhängen einer Anschlagkette 8 zur Verkürzung des Gesamtgehänges für die Bedienungsperson leichter zugänglich ist als bei dem bekannten Haken gemäß Fig. 1, was es einem Anwender erleichtert, die Anschlagkette 8 in den Verkürzungsschlitz 10 einzuhängen. Denn es ist nicht mehr notwendig, den Verkürzungshaken 1 so zu positionieren, daß der Verkürzungsschlitz 10 gut zugänglich wird. Dieser Vorteil ist dann besonders groß, wenn zum Einhängen der Verkürzungskette 1 aufgrund deren Gewichtes beide Hände des Anwenders erforderlich sind.

Fig. 4 zeigt nun den Verkürzungshaken 1 aus Fig. 3 in einem Zustand, in dem die unten im Kuppelanschluß 4 montierte Anschlagkette 8 an ihrem anderen Ende in den Verkürzungsschlitz 10 des Einhakbereiches 9 eingeführt ist.

Wegen des Gesamtgewichtes führt hier infolge des Einhängens der Anschlagkette 8 in den Verkürzungsschlitz 10 der dann wirksame Gesamtschwerpunkt am Verkürzungshaken 1 wieder zu einer vertikalen Ausrichtung von Öse 2 und Kuppelteil 4. Dabei tritt der Zustand ein, wie er aus Fig. 4 erkennbar ist, daß nämlich der Verkürzungsschlitz 10 mit dem an ihm angebrachten Abschnitt der Anschlagkette 8 und der Kuppelschlitz 7 mit dem dort montierten Endglied der Anschlagkette 8 jeweils sich in Zugrichtung der Kette so ausrichten, daß die Kette korrekt im Haken liegt, somit die Schlitze stets in Richtung des angeschlossenen Kettenabschnitts weisen und es zu keiner Verkantung zwischen Kette und Schlitz kommt.

Montiert man zur Verwendung bei einem Zwei-Strang-Gehänge zwei solche Haken 1, wie sie in Fig. 3 gezeigt sind, an einem Aufhängering 3, ergibt sich die Anordnung, wie sie aus Fig. 5 entnehmbar ist. Auch hier sind, wie bei der Anordnung aus Fig. 2, die beiden Verkürzungshaken 1 in zueinander entgegengesetzter Ausrichtung am Aufhängering 3 angebracht, so daß die Verkürzungsschlitze 10 beider Verkürzungshaken 1 hier auf einander entgegen gerichteten Seiten der Gesamtanordnung nach außen vorstehen, wie dies Fig. 5 zeigt.

Im unbelasteten Zustand dieser Anordnung aus Fig. 5, bei dem nur unten eine Anschlagkette 8 an jedem der beiden Kuppelanschlüsse 4 hängt, richten sich die Verkürzungsschlitze 10 der beiden Verkürzungshaken 1 nicht deckungsgleich aus. Infolge des Kettengewichtes sind dabei die Kuppelschlitze 7 zueinander sowie zum Mittelpunkt der oberen Ösen 2 ausgerichtet, während die Einhakbereiche 9 mit den Verkürzungsschlitzen 10 auf beiden Seiten vorragen und ein leichtes Einführen einer Kette in einen der Verkürzungsschlitze 10 zur Verkürzung gestatten.

Bei dem Ausführungsbeispiel eines Verkürzungshakens 1, wie es in den Figuren 3 bis 5 gezeigt ist, ist der Verkürzungsschlitz 10 unter einem Anstellwinkel α relativ zur Ausrichtung des Kuppelschlitzes 7 geneigt angebracht, wobei es sich bei diesem Winkel α um einen spitzen Winkel handelt, der vorzugsweise in einem Bereich von 10° bis 40° und bevorzugt bei 15° liegt.

Bei dem in Fig. 3 dargestellten Verkürzungshaken 1 ist am Einlauf in den Verkürzungsschlitz 10 oben eine verschwenkbare Sicherungsfalle 12 vorgesehen, die ein unerwünschtes Auslaufen eines einmal eingehängten Kettengliedes oder Kettenabschnitts verhindert. Diese Sicherungsfalle 12 ist nur bei der Darstellung der Fig. 3 eingezeichnet, bei der Darstellung der Figuren 4 und 5 jedoch weggelassen.

## Patentansprüche

1. Verkürzungshaken (1) mit Kuppelanschluß (4) zum Verkürzen von Anschlagketten (8) in Gehängen, mit einem Hakenkörper (11), der oben eine Öse (2) zum Ankoppeln an einen Aufhängering (3) und unten einen Kuppelanschluß (4) mit einem von zwei parallelen Seitenwangen (5) begrenzten, nach unten hin offenen Kuppelschlitz (7) zum Anhängen einer Kette (8) sowie in seinem mittleren Bereich einen einen nach oben offenen geradlinig verlaufenden Verkürzungsschlitz (10) ausbildenden Einhakbereich (9) aufweist, an dem eine am Kuppelanschluß (4) angekoppelte Kette (8) mit ihrem freien Endbereich einhakbar ist, wobei am Hakenkörper (11) nur jeweils ein Kuppelschlitz (7) und ein Verkürzungsschlitz (10) ausgebildet ist,.
**dadurch gekennzeichnet, dass**
der Kuppelschlitz (7) und der Verkürzungsschlitz (10) in Seitenansicht des Verkürzungshakens (1) gesehen, seitlich zueinander versetzt angebracht sind, und
die Öse (2) oben am Hakenkörper (11) einen kreisförmigen Querschnitt aufweist, wobei die Längsmittellinie (M-M) des Kuppelschlitzes (7) durch den Mittelpunkt des Querschnitts der Öse (2) verläuft.

2. Verkürzungshaken nach Anspruch 1, **dadurch gekennzeichnet, daß** der Verkürzungsschlitz (10) relativ zum Kuppelschlitz (4) unter einem spitzen Winkel (α), der am Hakenkörper (11) nach unten hin divergiert, ausgerichtet ist.

3. Verkürzungshaken nach Anspruch 2, **dadurch gekennzeichnet, daß** der spitze Winkel (α) im Bereich von 10° bis 40°, bevorzugt bei 15°, liegt.

4. Verkürzungshaken nach einem der Ansprüche 1 bis 3, **dadurch gekennzeichnet, daß** am Einlaß des Verkürzungsschlitzes (10) eine Sicherungsfalle (12) zum Verhindern des Herauslaufens eines eingehängten Kettengliedes (8) aus dem Verkürzungsschlitz (10) angebracht ist.

## Claims

1. A shortening hook (1) with a coupling connection (4) for shortening sling chains (8) in hangers, having a hook body (11) which comprises an eyelet (2) at the top for coupling to a suspension ring (3) and at the bottom a coupling connection (4) with a coupling slot (7) which is delimited by two parallel side wings (5) and is downwardly open for the suspension of a chain (8) and in its central region comprises a hooking-in region (9), which realizes an upwardly open, rectilinearly extending shortening slot (10) and on which a chain (8), which is coupled to the coupling connection (4), is hookable by way of its free end region, wherein in each case only one coupling slot (7) and one shortening slot (10) are realized on the hook body (11),
**characterized in that**
the coupling slot (7) and the shortening slot (10), when the shortening hook (1) is seen in side view, are mounted offset laterally with respect to one another, and
the eyelet (2) at the top of the hook body (11) comprises a circular cross section, wherein the longitudinal center line (M-M) of the coupling slot (7) extends through the center point of the cross section of the eyelet (2).

2. The shortening hook as claimed in claim 1, wherein the shortening slot (10) is aligned relative to the coupling slot (4) at an acute angle (α) which diverges downward on the hook body (11).

3. The shortening hook as claimed in claim 2, wherein the acute angle (α) is within the range of between 10° and 40°, in a preferred manner is 15°.

4. The shortening hook as claimed in one of claims 1 to 3, wherein a safety catch (12) is mounted at the inlet of the shortening slot (10) to prevent a suspended chain link (8) escaping from the shortening slot (10).

## Revendications

1. Crochet de raccourcissement (1) avec raccord d'accouplement (4) pour raccourcir des chaînes d'élingage (8) dans des suspensions, avec un corps de crochet (11) qui présente en partie haute un oeillet (2) pour une liaison à un anneau de suspension (3) et en partie basse un raccord d'accouplement (4) avec une fente de liaison (7) ouverte vers le bas, délimitée par deux joues latérales parallèles (5), pour l'accrochage d'une chaîne (8) ainsi que, dans sa zone centrale, une zone d'accrochage (9) formant une fente de raccourcissement (10) ouverte vers le haut et s'étendant en ligne droite, sur laquelle une chaîne (8) reliée au raccord d'accouplement (4) est apte à être accrochée par sa zone d'extrémité libre, une seule fente de liaison (7) et une seule fente de raccourcissement (10) étant formées sur le corps de crochet (11),
**caractérisé en ce que**
la fente de liaison (7) et la fente de raccourcissement (10), vues en vue latérale du crochet de raccourcissement (1), sont décalées latéralement l'une par rapport à l'autre, et
l'oeillet (2) présente en partie haute sur le corps de crochet (11) une section transversale circulaire, la ligne médiane longitudinale (M-M) de la fente de liaison (7) passant par le centre de la section transversale de l'oeillet (2).

2. Crochet de raccourcissement selon la revendication 1, **caractérisé en ce que** la fente de raccourcissement (10) est orientée par rapport à la fente de liaison (4) selon un angle aigu (α) qui diverge vers le bas sur le corps du crochet (11).

3. Crochet de raccourcissement selon la revendication 2, **caractérisé en ce que** l'angle aigu (α) est compris entre 10° et 40°, étant de préférence de 15°.

4. Crochet de raccourcissement selon l'une des revendications 1 à 3, **caractérisé en ce qu'**à l'entrée de la fente de raccourcissement (10), est monté un loquet de sécurité (12) pour empêcher un maillon de chaîne (8) accroché de sortir de la fente de raccourcissement (10).
